# EUROPEAN PATENT APPLICATION

(11) **EP 4 418 170 A1**
(43) Date of publication of application: **21.08.2024**
(21) Application number: 24156431.9
(22) Date of filing: 07.02.2024
(51) Int. Cl.: G06N 20/20, G06N 5/01, G06V 10/764

(54) **INFERENCE APPARATUS, IMAGING APPARATUS, METHOD OF CONTROLLING INFERENCE APPARATUS, COMPUTER PROGRAM, AND DATA CARRIER**

(30) Priority: 17.02.2023 JP 2023023494
(71) Applicant: CANON KABUSHIKI KAISHA, Tokyo 146-8501 (JP)
(72) Inventor: HASEGAWA, Reiji, Tokyo, 146-8501 (JP)
(74) Representative: Canon Europe Limited

(57) **Abstract**

An inference apparatus includes a first machine learned model including a plurality of learners and outputting likelihoods of a plurality of classes, and a plurality of second machine learned models corresponding to the plurality of classes, performs computation of a second machine learned model corresponding to a first class selected from the plurality of classes based on likelihoods calculated in the middle of computation of the plurality of learners in the first machine learned model, in parallel with remaining computation of the plurality of learners in the first machine learned model, and in a case where a second class selected based on likelihoods when computation of the plurality of learners in the first machine learned model is fully completed is coincident with the first class, continues the computation of the second machine learned model corresponding to the first class, thereby outputting an inference result.

## Description

### BACKGROUND OF THE INVENTION

### Field of the Invention

The present invention relates to an inference apparatus making an inference in object detection.

### Description of the Related Art

In recent years, progress has been made in automatization of settings for a camera, and the camera itself can determine and set various parameters. A machine learned model is used for the automatization in some cases.

The automatization using a plurality of machine learned models (ensemble learning) is known. However, when the number of machine learned models to be used is increased, a computation amount and a processing time are generally increased. For example, in a case where a machine learned model 2 or 3 is selected and used based on a determination result of a machine learned model 1, an inference of next machine learned model cannot be started unless an inference of one machine learned model ends. Therefore, successive computation is necessary.

Japanese Patent Application Laid-Open Publication No. 2019-179468 discusses, as a method used for a manufacturing apparatus, a method of computing a remaining processing time of a prediction model, and in a case where a computation is not to be completed within a predetermined time, performing the next computation using a value of an intermediate result of the computation. In a case where successive computing is necessary, such a method can reduce the computation amount.

However, in the machine learned model discussed in Japanese Patent Application Laid-Open Publication No. 2019-179468, the computation is performed only halfway through and is not performed for a time originally required. Therefore, accuracy of a computation result is not necessarily sufficiently assured.

Although a recent central processing unit (CPU) is improved in processing performance, an upper limit of a processing speed in an apparatus driven by a battery, such as a camera, is often low as compared with a personal computer (PC) connected to an external power supply. Therefore, in a case where computations of a plurality of machine learned models are successively performed, the computation time is increased.

### SUMMARY OF THE INVENTION

According to a first aspect of the present invention, there is provided an inference apparatus as specified in claims 1 to 7. According to a second aspect of the present invention, there is provided an imaging apparatus as specified in claim 8. According to a third aspect of the present invention, there is provided a method of controlling an inference apparatus as specified in claim 9. According to a fourth aspect of the present invention, there is provided a computer program as specified in claim 10. According to a fifth aspect of the present invention, there is provided a computer-readable data carrier having stored thereon the computer program as specified in claim 11.

Further features of the present invention will become apparent from the following description of embodiments with reference to the attached drawings.

### BRIEF DESCRIPTION OF THE DRAWINGS

Fig. 1 is a block diagram illustrating a lens-interchangeable camera.
Fig. 2 is a flowchart illustrating action detection processing.
Fig. 3 is a flowchart illustrating action detection processing.
Fig. 4 is a flowchart illustrating action detection processing.
Figs. 5A and 5B are a flowchart and a diagram, respectively, illustrating action detection processing.
Fig. 6 is a flowchart illustrating action detection processing.
Figs. 7A, 7B, and 7C each illustrate an example of an image captured and displayed.

### DESCRIPTION OF THE EMBODIMENTS

Some embodiments of the present invention are described in detail below with reference to the accompanying drawings. The following embodiments do not limit the invention according to the claims. A plurality of features is described in the embodiments; however, not all of the features are necessarily essential for the invention, and the features may be optionally combined. In the accompanying drawings, the same or similar components are denoted by the same reference numerals, and repetitive description is omitted.

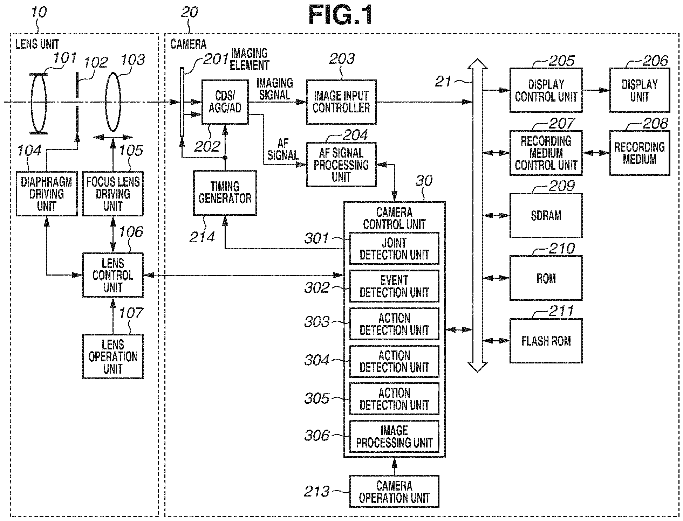

Fig. 1 is a diagram illustrating a configuration of a lens-interchangeable camera as an example of an imaging apparatus according to a first embodiment of the present invention. The imaging apparatus according to the present embodiment includes an interchangeable lens unit 10 and a camera 20. A lens control unit 106 totally controls operation of lenses, and a camera control unit 30 totally controls operation of an entire camera system including the lens unit 10, and the lens control unit 106 and the camera control unit 30 can communicate with each other through a terminal provided on a lens mount.

A configuration of the lens unit 10 is described. A fixed lens 101, a diaphragm 102, and a focus lens 103 constitute an imaging optical system. The diaphragm 102 is driven by a diaphragm driving unit 104, and controls a quantity of light entering an imaging element 201 described below. The focus lens 103 is driven by a focus lens driving unit 105, and a focal distance of the imaging optical system is varied depending on a position of the focus lens 103. The diaphragm driving unit 104 and the focus lens driving unit 105 are controlled by the lens control unit 106, and respectively determine a numerical aperture of the diaphragm 102 and the position of the focus lens 103.

A lens operation unit 107 is an input device group for a user to perform setting relating to operation of the lens unit 10, for example, switching between autofocus (AF) mode and manual focus (MF) mode, positional adjustment of the focus lens 103 in the MF mode, setting of an operation range of the focus lens 103, and setting of a camera shake correction mode. In a case where the lens operation unit 107 is operated, the lens control unit 106 performs control corresponding to the operation.

The lens control unit 106 controls the diaphragm driving unit 104 and the focus lens driving unit 105 based on control commands and control information received from the camera control unit 30 described below, and transmits lens control information to the camera control unit 30.

In the present embodiment, a case where an interchangeable lens unit is attachable/detachable to/from a camera main body is described; however, the lens unit may be provided integrally with the camera main body.

A configuration of the camera 20 is described. The camera 20 is configured to acquire imaging signals from light fluxes having passed through the imaging optical system of the lens unit 10.

The imaging element 201 includes a charge-coupled device (CCD) sensor or a complementary metal-oxide semiconductor (CMOS) sensor. The light fluxes having entered the imaging optical system of the lens unit 10 form an image on a light reception surface of the imaging element 201, and are photoelectrically converted into signal charges corresponding to a quantity of entered light by photodiodes provided in pixels arranged in the imaging element 201. The signal charges accumulated in the photodiodes are sequentially read out as voltage signals corresponding to the signal charges from the imaging element 201 by a driving pulse output by a timing generator 214 in response to an instruction from the camera control unit 30.

A CDS/AGC/AD converter 202 (hereinafter, referred to as "converter 202" for convenience) performs correlated double sampling for removing reset noise, gain adjustment, and analog to digital (AD) conversion on imaging signals read out from the imaging element 201. The converter 202 outputs the imaging signals and AF signals subjected to these processing to an image input controller 203 and an AF signal processing unit 204, respectively.

The image input controller 203 stores the imaging signals output from the converter 202 as image signals in a synchronous dynamic random access memory (SDRAM) 209 through a bus 21. The image signals stored in the SDRAM 209 are read out by a display control unit 205 through the bus 21, and are displayed on a display unit 206. In a recording mode in which the image signals are recorded, the image signals stored in the SDRAM 209 are recorded in a recording medium 208, such as a semiconductor memory, by a recording medium control unit 207.

A read only memory (ROM) 210 stores control programs and processing programs to be executed by the camera control unit 30, and various kinds of data and the like necessary for execution of the programs. A flash ROM 211 stores various kinds of setting information relating to operation of the camera 20 set by the user, and the like.

A joint detection unit 301 in the camera control unit 30 detects and stores joints, organs, and the like of a target person in the imaging signals input from the image input controller 203. As a detection method, a known method using a neural network or a machine learned model is usable, and details of the method are not described.

An event detection unit 302 infers a sport event (class) played by the target person by receiving j oint information output from the joint detection unit 301 as an input. Examples of the event include track and field, football, and tennis. In the present specification, an event A, an event B, and an event C are inferred, but the event detection unit 302 may discriminate more events. The event detection unit 302 infers probability likelihoods of the events A to C. In particular, in a third embodiment described below, the probability likelihoods of the events A to C are inferred by a softmax function such that a sum of the probability likelihoods is 100%. As a detection method, an ensemble learned model including weak discriminators (learners) is used. In the present embodiment, gradient boosting decision tree (GBDT) is used; however, random forests or the like may be used. The detection method may be a known method, and details thereof are not described.

Action detection units 303 to 305 each infer a probability likelihood of the target person performing a specific action by receiving the joint information output from the joint detection unit 301. The action is, for example, a racket swinging action in tennis. As the detection method, the ensemble learned model including weak discriminators (learners) is used. In the present embodiment, the GBDT is used; however, the random forests or the like may be used. The detection method may be a known method, and details thereof are not described. The plurality of action detection units includes action detection units 303 to 305 corresponding to the events A to C, respectively, and are selectively used based on an algorithm described below. The plurality of action detection units may use different algorithms, or may use the same algorithm with different parameters.

An image processing unit 306 applies predetermined image processing to the image signals accumulated in the SDRAM 209. Examples of the image processing applied by the image processing unit 306 include what is called development processing, such as white balance adjustment processing, color interpolation (demosaic) processing, and gamma correction processing as well as signal format conversion processing and scaling processing; however, the image processing is not limited thereto.

The camera control unit 30 controls the units in the camera 20 while exchanging information with the units in the camera 20. In addition, the camera control unit 30 performs various processing corresponding to a user operation, such as turning on/off of a power supply, changing of various kinds of settings, imaging processing, AF processing, and reproduction processing of recorded images, in response to an input from a camera operation unit 213 based on the user operation. Further, the camera control unit 30 transmits the control commands for the lens unit 10 (lens control unit 106) and information on the camera 20 to the lens control unit 106, and acquires information on the lens unit 10 from the lens control unit 106. The camera control unit 30 includes a microcomputer, and controls the entire camera system including the interchangeable lens unit 10 by executing computer programs stored in the ROM 210.

Processing performed by the camera 20 is described below. The camera control unit 30 controls the units of the camera 20 based on an imaging processing program which is a computer program to perform the following processing.

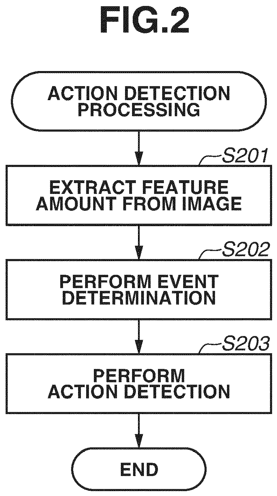

Fig. 2 is a flowchart illustrating a procedure for detecting an action of a person by the camera 20. A conventional example not performed in the present embodiment is described herein for comparison with an embodiment described below.

In step S201, the camera control unit 30 extracts a feature amount from an image. In the conventional example, the joint detection unit 301 extracts a feature of a person, which is positional coordinates of joints in this case, from the image.

In step S202, the event detection unit 302 infers, as the sport event played by the person, a sport event having the highest likelihood among sport events inferred using the feature amount of the person. In the conventional example, the likelihoods are output for the respective three events A, B, and C.

In step S203, using the action detection unit 303, 304, or 305 corresponding to the event inferred to have the highest likelihood in step S202, the event detection unit 302 infers specific actions performed by the person based on the feature amount of the person. Since the action detection units 303 to 305 have learned actions specific to the respective sport events, a specific action of the person matching a learned action is output as being a high likelihood.

In the above-described manner, it is inferred that the person in the image performs a specific action of a specific sport event. In this case, however, the processing by the event detection unit 302 and the processing by the action detection unit 303, 304, or 305 are performed in order. Therefore, a computation time for two machine learned models is necessary. In a case where a plurality of persons is included in the image, the processing is performed by the number of persons.

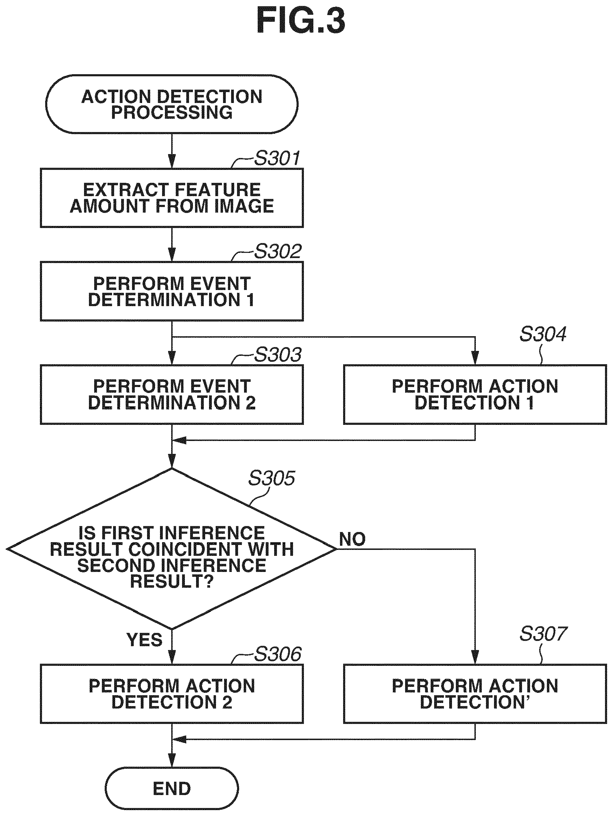

Fig. 3 is a flowchart illustrating a procedure for detecting an action of a person performed by the camera 20.

The flowchart in Fig. 3 is different from the flowchart in Fig. 2 in that the processing performed by the event detection unit 302 and the action detection units 303 to 305 is performed using the GBDT in the same number of decision trees, and the processing is performed in a divided manner.

More specifically, the event detection unit 302 performs event determination processing for one person by dividing the event determination processing into event determination 1 in step S302 and event determination 2 in step S303. Further, each of the action detection units 303 to 305 performs action detection processing for one person by dividing the action detection processing into action detection 1 in step S304 and action detection 2 in step S306. The ratio of dividing the processing may be 50:50, or the ratio may be appropriately changed.

When the event detection unit 302 performs the event determination 1 in step S302, a first half of processing by the weak discriminators of the GBDT ends. In the case of the GBDT, residuals are learned in order by the weak discriminators during model learning. Thus, in the event determination 1, processing by the weak discriminators in the event detection unit 302 is partially performed, and in the event determination 2, the processing by the weak discriminators therein is fully completed. Here, when a sum of values of leaf nodes at a certain point of the event determination is applied to a sigmoid function, the event can be inferred even through accuracy is low. This means that the event can be inferred at the stage of the event determination 1 even though the accuracy is low.

The details of the flowchart in Fig. 3 are described below while it is supposed that steps S303 and S304 are simultaneously performed in parallel, and steps S306 and S307 are simultaneously performed in parallel.

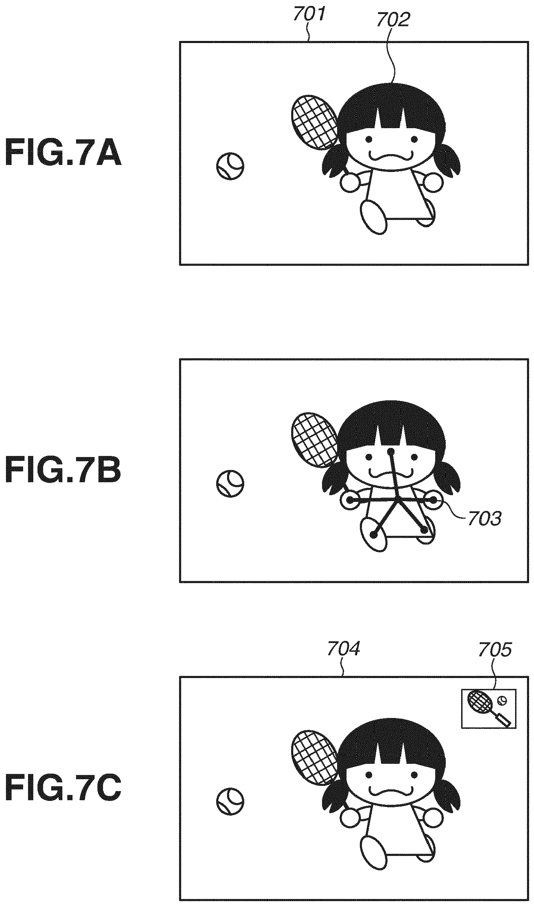

In step S301, the camera control unit 30 extracts a feature amount from a captured image. The camera 20 captures an image 701 in Fig. 7A. In the present embodiment, the joint detection unit 301 detects a feature of a person 702, which is a positional coordinate 703 (Fig. 7B) of each joint in this case, from the image 701.

In step S302, the event detection unit 302 performs processing of the event determination 1 to infer a sport event played by the person 702 by using the feature amount of the person 702. As described above, the event determination 1 is the first half of the divided determination processing performed by the event detection unit 302, and an event is inferred with low accuracy in this processing. More specifically, the event detection unit 302 infers, as the sport event, a sport event having the highest likelihood among likelihoods of the respective events calculated with low accuracy. The image 701 is displayed as an image 704 on the display unit 206 after development processing. At this time, the event currently inferred is displayed as an icon 705 (Fig. 7C).

In step S303, the event detection unit 302 performs processing of the event determination 2 to infer the sport event played by the person 702 by using the feature amount of the person 702. Thus, the processing by the weak discriminators in the event determination is fully completed. Therefore, the event can be inferred with the accuracy as designed. Likewise, the event currently inferred is displayed as the icon 705.

In step S304, the action detection 1 corresponding to a first half of the action detection processing by the action detection unit 303, 304, or 305 corresponding to the event inferred with low accuracy in the event determination 1 in step S302 is speculatively performed. In other words, the action detection 1 is processed in parallel with the event determination 2 in step S303.

In step S305, the camera control unit 30 compares an inference result of the event with low accuracy obtained in step S302 with an inference result of the event with the predetermined accuracy obtained in step S303. In a case where the inference results of the event are coincident with each other (YES in step S305), the processing proceeds to step S306. In a case where the inference results of the event are not coincident with each other (NO in step S305), the processing proceeds to step S307.

In step S306, since the inferred event serving as a presumption for the action detection speculatively performed in step S304 is correct, the action detection 2 that is a latter half of the action detection processing by the action detection unit 303, 304, or 305 corresponding to the same event is performed to infer the action of the person. In other words, the action detection for the same event is continued. In this case, the processing by the event detection unit and the processing by the action detection unit, which are originally performed successively as in Fig. 2, can be processed in parallel. If the same processing time is necessary for the processing by the event detection unit and for the processing by the action detection unit, and if each of the processing is divided into two halves, namely, the first half and the latter half, the action can be inferred with final accuracy in the processing time three-fourth the processing time necessary for the action inference illustrated in the flowchart of Fig. 2.

In step S307, since the inferred event serving as a presumption for the action detection speculatively performed in step S304 is incorrect, the processing by the action detection unit 303, 304, or 305 corresponding to the event inferred with the designed accuracy in step S303 is fully performed without being divided (action detection'). In this case, although speculative execution of the action detection 1 in step S304 based on the inference result of the event determination 1 in step S302 is incorrect, the processing time is substantially equal to the processing time necessary for the successive execution in Fig. 2, except for a load of the determination processing in step S305 and the like.

In a case where a plurality of persons is included in the image, the above-described processing is performed by the number of persons.

The captured image 701 is recorded in the recording medium 208 by the recording medium control unit 207. At this time, the event inferred in steps S302 and S303 and the action inferred in step S306 or S307 are recorded in the recording medium 208 together with image data.

As described above, according to the first embodiment of the present invention, even in the case of the plurality of machine learned models requiring successive execution, execution of a second and subsequent machine learned models can be speculatively started, which can make it possible to obtain a final inference result at a timing earlier than a timing in the case of simple successive execution.

After the speculative execution is started, computation of a model currently performing the inference computation and computation of a next model can be performed in parallel.

In a second embodiment, as a modification of the first embodiment, processing in a case where a required computation time is short is described. In the present embodiment, the same configuration as the configuration in the first embodiment is provided and the same control as the control in the first embodiment is performed except for processing separately described.

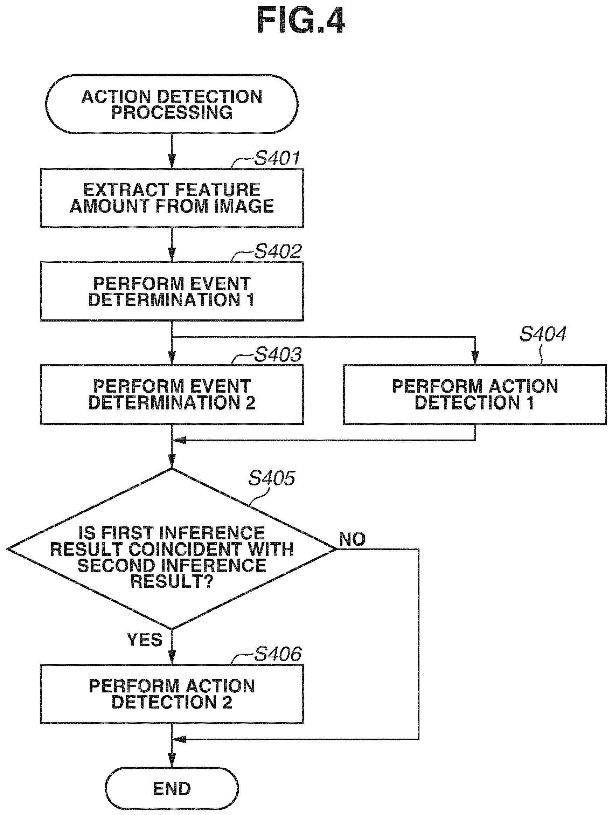

Fig. 4 is a flowchart illustrating a procedure for detecting an action of a person by the camera 20 according to the second embodiment. The camera control unit 30 controls the units of the camera 20 based on an imaging processing program which is a computer program to perform the following processing. Processing in steps S403 and S404 described below are simultaneously processed in parallel.

In step S401, the camera control unit 30 extracts a feature amount from an image. Description is provided by using the image 701 in Fig. 7A as an example of the image captured by the camera 20.

In step S402, the event detection unit 302 performs the event determination 1 as the processing to infer a sport event played by the person 702 by using the feature amount of the person 702. As described in step S302 of Fig. 3, the event determination 1 corresponds to the first half of the divided determination processing performed by the event detection unit 302, and infers an event with low accuracy.

In step S403, the event detection unit 302 performs the processing of the event determination 2 to infer the sport event played by the person 702 by using the feature amount of the person 702.

In step S404, the action detection 1 corresponding to a first half of the action detection processing by the action detection unit 303, 304, or 305 corresponding to the event inferred with low accuracy in the event determination 1 in step S402 is speculatively performed. In other words, the action detection 1 is performed in parallel with the event determination 2 in step S403.

In step S405, the camera control unit 30 compares an inference result of the event with low accuracy obtained in step S402 with an inference result of the event with the predetermined accuracy obtained in step S403. In a case where the inference results of the events are coincident with each other (YES in step S405), the processing proceeds to step S406. In a case where the inference results of the event are not coincident with each other (NO in step S405), the processing ends. In the present embodiment, unlike the first embodiment, in a case where the event as a prerequisite for the action detection 1 speculatively performed in step S304 is incorrect, the latter half of the processing is not performed. In other words, the action detection processing cannot be performed. Therefore, the inference result at the previous imaging may be used if necessary.

In step S406, since the inferred event serving as a presumption for the action detection speculatively performed in step S304 is correct, the action detection 2 that is a latter half of the action detection processing by the action detection unit 303, 304, or 305 corresponding to the same event is performed to infer the action of the person. In this case, the processing by the event detection unit and the processing by the action detection unit, which are originally performed successively as in Fig. 2, can be processed in parallel.

As described above, although the action cannot be inferred in some cases, if the same processing time is necessary for the processing by the event detection unit and for the processing by the action detection unit, and if each of the processing is divided into two halves, namely, the first half and the latter half, in a case where the speculative execution is correct, the action can be inferred in the processing time three-fourth the processing time necessary for the action inference illustrated in the flowchart of Fig. 2. In a case where the speculative execution is incorrect, the processing can be completed in half the processing time necessary for the action inference illustrated in the flowchart in Fig. 2.

As described above, according to the second embodiment of the present invention, even in the case of the plurality of machine learned models requiring successive execution, execution of a second and subsequent machine learned models can be speculatively started, which can make it possible to obtain a final inference result at a timing earlier than a timing in the case of simple successive execution.

After the speculative execution is started, computation of a model currently performing the inference computation and computation of a next model can be performed in parallel. In a case where the speculative execution is incorrect, the computation is ended, which makes it possible to design such that the processing time is shorter than the execution time of the two machine learned models as a whole.

In a third embodiment, as a modification of the first embodiment, an example in which computation resources of the action detection unit are distributed based on the likelihood of each event is described. In the present embodiment, the same configuration as the configuration in the first embodiment is provided and the same control as the control in the first embodiment is performed except for processing separately described.

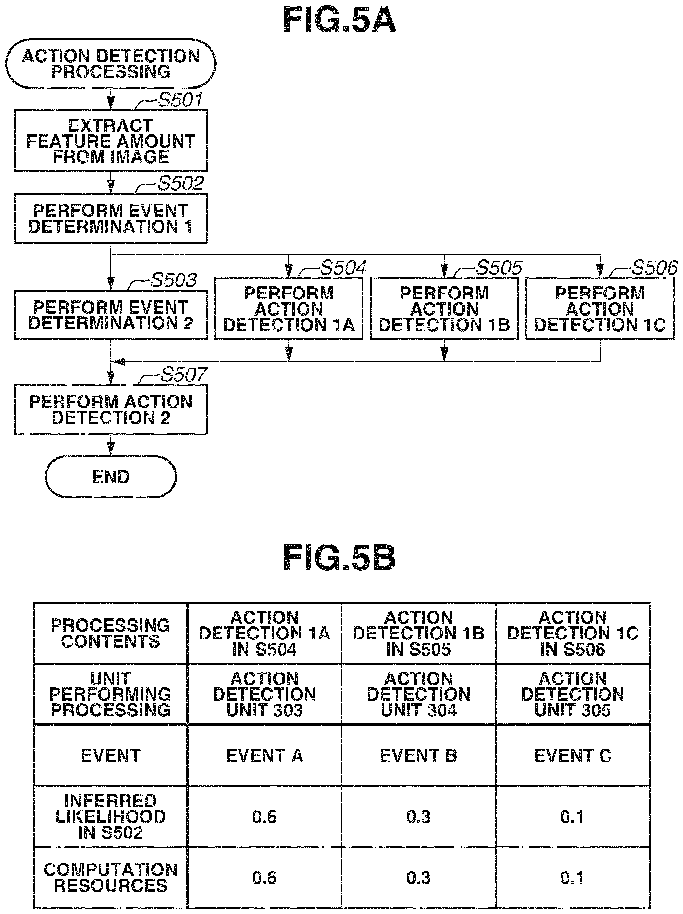

Fig. 5A is a flowchart illustrating a procedure for detecting an action of a person by the camera 20 according to the third embodiment. The camera control unit 30 controls the units of the camera 20 based on an imaging processing program which is a computer program to perform the following processing. Processing in steps S503, S504, S505, and S506 are simultaneously processed in parallel.

In step S501, the camera control unit 30 extracts a feature amount from an image. Description is provided by using the image 701 in Fig. 7A as an example of the image captured by the camera 20.

In step S502, the event detection unit 302 performs the processing of the event determination 1 to infer a sport event played by the person 702 by using the feature amount of the person 702. As described above, the event determination 1 corresponds to the first half of the divided determination processing performed by the event detection unit 302, and infers a plurality of events with low accuracy.

In step S503, the event detection unit 302 performs the processing of the event determination 2 to infer the sport event played by the person 702 by using the feature amount of the person 702.

In steps S504 to S506, the first half of the action detection processing by the action detection units 303 to 305 corresponding to the events inferred with low accuracy in step S502 is speculatively performed. Action detection 1A, action detection 1B, and action detection 1C performed in parallel at this time respectively correspond to the plurality of events inferred in step S502. In this example, description is provided based on an assumption that three events (A to C) are inferred in step S502. The number of action detection processing steps performed in parallel may be changed based on the number of inferred events.

Fig. 5B illustrates an example of inferred likelihoods and computation resource distribution in a case where three events are inferred. As illustrated in a table, in a case where, in the action detection 1A in step S504, the inferred likelihood of the event A inferred in step S502 is 0.6, the action detection unit 303 performs the action detection by using the computation resources corresponding to a ratio of 0.6 until the processing in step S503 ends. Likewise, in steps S505 and S506, the processing is performed by using the computation resources corresponding to a ratio equal to the inferred likelihood.

At the time when the processing in step S503 ends, the processing in steps S504 to S506 is once interrupted. At the time when the processing in step S503 ends, the event determination with the designed accuracy by the event detection unit 302 is completed, and fixed likelihoods are calculated because the event determination processing is fully completed.

In step S507, remaining computation of the action detection that has been interrupted at the time when the processing in step S503 ends, is performed for the event having the highest likelihood among the likelihoods inferred in step S503, thereby performing final inference of the action.

At this time, it is assumed that the machine learned models of the event detection unit 302 and the action detection units 303 to 305 each require the same processing time, and the event detection unit 302 and the action detection units 303 to 305 are executed by different processors at the same processing speed. In this case, as a best example, in a case where the inference result in step S502 is the event A and the inference result in step S503 is also the event A, the processing of 0.6 × 0.5 = 30% is speculatively performed in parallel in step S504, and the processing of remaining 70% is performed in step S507. Accordingly, as compared with the processing time required in the flowchart in Fig. 2, the computation can be performed in the processing time of 170/200 = 85% as a whole.

In contrast, as a worst example, in a case where the inference result in step S502 is the event A and the inference result in step S503 is the event C, the processing of 0.1 × 0.5 = 5% is speculatively performed in parallel in step S504, and the processing of remaining 95% is performed in step S507. Accordingly, as compared with the processing time required in the flowchart in Fig. 2, the computation can be performed in the processing time of 195/200 = 97.5% as a whole.

As described above, according to the third embodiment of the present invention, even in the case of the plurality of machine learned models requiring successive execution, execution of a second and subsequent machine learned models can be speculatively started, which can make it possible to obtain a final inference result at a timing earlier than a timing in the case of simple successive execution.

After the speculative execution is started, computation of a model currently performing the inference computation and computation of a next model can be performed in parallel. The computation resources are distributed to the speculative inference based on the likelihoods at the time of the parallel computation, which makes it possible to reduce the processing time as compared with the original successive execution even if the final inference result of the event detection unit 302 is different from the inference result in step S502. In the present embodiment, the example in which the computation resources are distributed based on the likelihoods of the events is described; however, the computation resources may be distributed based on another condition.

In a fourth embodiment, as a modification of the first embodiment, an example in which the action detection performed in parallel with the event determination is reviewed a plurality of times is described. In the present embodiment, the same configuration as the configuration in the first embodiment is provided and the same control as the control in the first embodiment is performed except for processing separately described.

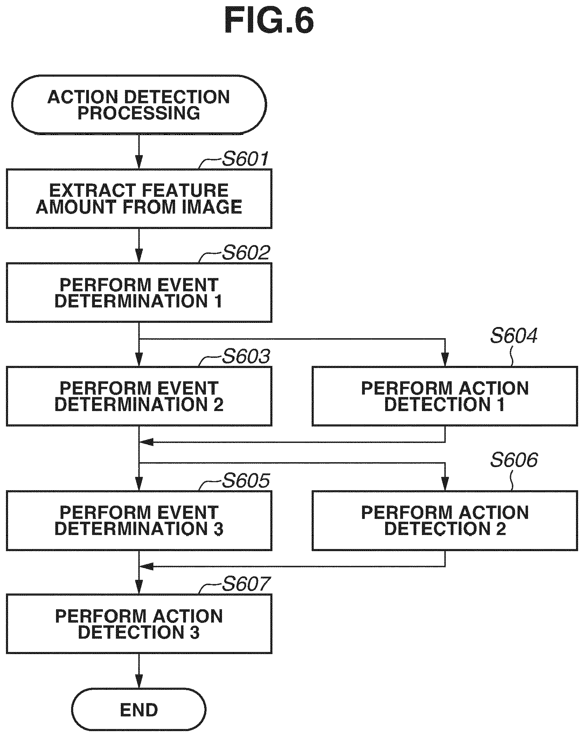

Fig. 6 is a flowchart illustrating a procedure for detecting an action of a person by the camera 20 according to the fourth embodiment. The camera control unit 30 controls the units of the camera 20 based on an imaging processing program which is a computer program to perform the following processing. Processing in steps S603 and S604 are simultaneously processed in parallel, and processing in steps S605 and S606 are simultaneously processed in parallel. In the present embodiment, the event determination processing performed by the event detection unit 302 is divided into three steps of processing of steps S602, S603, and S604; however, the event determination processing may be further divided.

In step S601, the camera control unit 30 extracts a feature amount from an image. Description is provided by using the image 701 in Fig. 7A as an example of the image captured by the camera 20.

In step S602, the event detection unit 302 performs the processing of the event determination 1 to infer a sport event played by the person 702 by using the feature amount of the person 702, thereby inferring the event.

In step S603, the event detection unit 302 performs the processing of the event determination 2 to infer the sport event played by the person 702 by using the feature amount of the person 702, thereby inferring the event.

In step S604, a part of the action detection processing by the action detection unit 303, 304, or 305 corresponding to the event inferred in step S602 is performed until the processing in step S603 ends.

In step S605, the event detection unit 302 performs processing of event determination 3 to infer the sport event played by the person 702 by using the feature amount of the person 702, and infers the event based on the likelihoods fixed due to full completion of event determination processing.

In step S606, in a case where the event inferred in step S603 is coincident with the event inferred in step S602, remaining processing of the processing in step S604 is performed. In contrast, in a case where the event inferred in step S603 is different from the event inferred in step S602, computation processing is performed again in order to review a part of the action detection processing by the action detection unit 303, 304, or 305 corresponding to the event inferred in step S603, until the processing in step S605 ends.

In step S607, in a case where the event inferred in step S605 is coincident with the event inferred in step S603, remaining processing of the processing in step S606 is performed. In a case where the event inferred in step S605 is different from the event inferred in step S603, computation processing for reviewing the action detection processing by the action detection unit 303, 304, or 305 corresponding to the event inferred in step S605 is performed.

As described above, the action detection speculatively performed is reviewed a plurality of times, which is twice in the present embodiment, for each computation. In the case of the ensemble learned model, and in the case of the GBDT in particular, the inference result is close to the final inference result as the number of weak discriminators to be processed is increased. Thus, the action detection speculatively performed is reviewed a plurality of times, which makes it possible to reduce useless speculative execution.

As described above, according to the fourth embodiment of the present invention, even in the case of the plurality of machine learned models requiring successive execution, execution of a second and subsequent machine learned models can be speculatively started, which can make it possible to obtain a final inference result at a timing earlier than a timing in the case of simple successive execution.

After the speculative execution is started, computation of a model currently performing the inference computation and computation of a next model can be performed in parallel. In addition, the speculative execution is reviewed a plurality of times, which makes it possible to reduce useless speculative execution.

In other embodiments, the same configuration as the configuration in the first embodiment is provided and the same control as the control in the first embodiment is performed except for processing described below.

In the embodiments, the processing performed in parallel, such as the processing in steps S303 and S304, is uniformly referred to as parallel processing and is basically performed in parallel by a multiprocessor. However, the processing may be processed in a time division manner by one processor or a plurality of processors.

In the embodiments, implementation in the camera is described. In the case of the camera, a first action detection is performed at the time of turning on the camera, at the time of starting up live view, at the time of starting still image continuous imaging, at the time of starting up a moving image recording mode, at the time of starting moving image recording, or the like. The first action detection is similarly performed at the time of turning on the inference apparatus or the time of changing the mode of the inference apparatus. In this case, the speculative execution may not be performed the first time (e.g., immediately after startup) just in case. Further, in a case where the event is different from the event detected the previous time, the speculative execution may not be performed. In this case, the previous time refers to a previous frame in the case of a moving image or a live view and refers to a previous captured image in the case of a still image not including live view between images.

Each of the action detection units 303 to 305 outputs an action likelihood. Generally, a threshold for the likelihood is provided, and when the likelihood is greater than or equal to the threshold, it is determined that a specific action is performed.

In the case of the speculative execution, the likelihood of the action inference may be offset to a low side, or the threshold may be increased to make an incorrect action difficult to be detected.

The present invention can be realized by supplying a program for implementing one or more functions of the above-described embodiments to a system or an apparatus via a network or a storage medium, and causing one or more processors in a computer of the system or the apparatus to read and execute the program. Further, the present invention can also be realized by a circuit (e.g., application specific integrated circuits (ASIC)) for implementing one or more functions.

The invention is not limited to the above-described embodiments, and can be variously changed and modified without departing from the spirit and the scope of the invention.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but is defined by the scope of the following claims.

## Claims

1. An inference apparatus (20) comprising inference means (30) configured to perform inference processing,
wherein the inference means (30) performs computation of a first learned model that outputs likelihoods of a plurality of classes, performs computation of one or more second learned models corresponding to one or more classes selected from the plurality of classes based on likelihoods calculated at a first time point at which the computation of the first learned model is in progress, in parallel with the computation of the first learned model, and in a case where a class selected based on likelihoods calculated at a second time point at which the computation of the first learned model is advanced from the first time point is different from the one or more classes selected from the plurality of classes based on the likelihoods calculated at the first time point, starts computation of a second learned model corresponding to the class selected based on the likelihoods calculated by the first learned model at the second time point.

2. The inference apparatus (20) according to claim 1, wherein, in the case where the class selected based on the likelihoods calculated at the second time point is different from the one or more classes selected from the plurality of classes based on the likelihoods calculated at the first time point, the computation of the one or more second learned models corresponding to the one or more classes selected from the plurality of classes based on the likelihoods calculated at the first time point is interrupted.

3. The inference apparatus (20) according to claim 1, wherein, in a case where the class selected based on the likelihoods calculated by the first learned model at the second time point is coincident with the one or more classes selected from the plurality of classes based on the likelihoods calculated at the first time point, computation of the second learned model corresponding to the coincident class is continued.

4. The inference apparatus (20) according to claim 1, wherein the computation of the one or more second learned models corresponding to the one or more classes selected from the plurality of classes is performed using resources corresponding to a ratio based on the likelihoods calculated at the first time point.

5. The inference apparatus (20) according to claim 1, wherein the computation of the class of the first learned model and the computation of the classes of the second learned models are performed in a time division manner.

6. The inference apparatus (20) according to any one of claims 1 to 5, wherein the first learned model and the second learned models are gradient boosting decision trees.

7. The inference apparatus (20) according to claims 1 to 6, further comprising display means configured to display an image, the display means displaying information about the classes under computation while the computation of the second learned models is performed.

8. An imaging apparatus (20) comprising:
imaging means (10); and
the inference apparatus (20) according to claims 1 to 7.

9. A method of controlling an inference apparatus (20), the method comprising:
performing first computation (S302, S303, S402, S403, S502, S503, S602, S603, S605) of a first learned model that outputs likelihoods of a plurality of classes; and
performing second computation (S304, S306, S404, S406, S504-S507, S604, S606, S607) of a plurality of second learned models corresponding to the plurality of classes,
wherein, in the first computation, one or more classes are selected from the plurality of classes based on likelihoods calculated at a first time point at which the computation of the first learned model is in progress,
wherein, in the second computation, computation of the second learned models corresponding to the one or more classes is performed in parallel (S304, S404, S504-S506, S604, S606) with the computation of the first learned model in the first computation,
wherein, in the first computation, a class is selected from the plurality of classes based on likelihoods calculated at a second time point at which the computation of the first learned model is advanced from the first time point, and
wherein, in a case where the class selected based on the likelihoods calculated at the second time point is different from the one or more classes selected from the plurality of classes based on the likelihoods calculated at the first time point, computation of a second learned model corresponding to the class selected based on the likelihoods calculated by the first learned model at the second time point is started in the second computation.

10. A computer program comprising instructions which, when the program is executed by an inference apparatus (20), cause the inference apparatus (20) to carry out the method of claim 9.

11. A computer-readable data carrier having stored thereon the computer program of claim 10.
